# EUROPEAN PATENT SPECIFICATION

(11) **EP 3 434 109 B1**
(45) Date of publication and mention of the grant of the patent: **25.11.2020**
(21) Application number: 17770000.2
(22) Date of filing: 13.03.2017
(51) Int. Cl.: A23D 9/00, A21D 13/80, A23D 7/00

(54) **PLASTIC FAT AND ROLL-IN FAT COMPOSITION USING SAME**
PLASTISCHES FETT UND ROLL-IN-FETTZUSAMMENSETZUNG DAMIT
MATIÈRE GRASSE PLASTIQUE ET COMPOSITION DE MATIÈRE GRASSE MANIABLE AU ROULEAU L'UTILISANT

(30) Priority: 24.03.2016 JP 2016060004
(43) Date of publication of application: 30.01.2019
(73) Proprietor: Fuji Oil Holdings Inc., Osaka 598-8540 (JP)
(72) Inventor: NAKANO, Mikio, Tsukubamirai-shi Ibaraki 300-2436 (JP); KUMATANI, Tomoaki, Tsukubamirai-shi Ibaraki 300-2436 (JP); WATANABE, Shimpei, Izumisano-shi Osaka 598-8540 (JP); SUZUKI, Yuta, Izumisano-shi Osaka 598-8540 (JP)
(74) Representative: Becker & Kurig Partnerschaft Patentanwälte PartmbB
(86) International application number: PCT/JP2017/009887
(87) International publication number: WO 2017/163957

(56) References cited:
- EP-A1- 2 710 898
- WO-A1-2009/150951
- WO-A1-2012/161105
- WO-A1-2013/133138
- JP-A- 2002 253 117
- JP-A- 2007 282 606
- JP-A- 2007 282 606
- JP-A- 2012 070 655
- JP-A- 2014 161 247
- JP-A- 2015 012 829
- JP-A- 2016 021 941

## Description

### [Technical Field]

The present invention relates to an oil and fat having plasticity and excellent meltability in the mouth in a wide range of temperatures and a roll-in oil and fat composition using the plastic oil and fat having excellent extensibility and excellent meltability in the mouth in a wide range of temperatures.

### [Background Art]

When layered bakery food products such as pies or Danish pastries are produced, in order to form a layered structure, a roll-in oil and fat composition is folded into layers in a dough. Then, when baking is performed, a layered bakery food product having a unique favorable crispy texture and having a crunchy texture is obtained, but such a roll-in oil and fat composition is required to have extensibility in a wide range of temperatures (for example, 5 to 25 °C) during folding into the dough and an excellent crispy texture and meltability in the mouth after baking.

In response to the above requirements, in the related art, hydrogenated oil of animal and plant oils and fats is blended into a roll-in oil and fat composition as liquid oils and fats together with high-melting point oils and fats or medium-melting point oils and fats, and thus a roll-in oil and fat composition that has satisfactory properties of extensibility, an excellent crispy texture and meltability in the mouth after baking is obtained.

In recent years, the adverse effects of trans fatty acids in oils and fats derived from hydrogenated oil on health have been regarded as problems and there has been increasing demand for a low trans type roll-in oil and fat composition in which fractionated oil or transesterified oil of animal and plant oils and fats in place of hydrogenated oil is used as a base. Low trans type plastic oils and fats that have satisfactory properties of extensibility, an excellent crispy texture and meltability in the mouth after baking and a roll-in oil and fat composition using the same have been proposed.

Patent Literature 1 discloses a plastic oil and fat composition, wherein in a method of producing the plastic oil and fat composition that is produced using a sealed type continuous scraping tube cooler (A unit), cooling is performed so that a solid oil and fat content (SFC) of an oil phase when quenching plasticization is completed is an SFC of an oil phase of 50% or more when the plastic oil and fat composition is stored at 5 °C for 30 days. Specifically, as a composition containing a direct β type oil and fat crystal, an oil and fat composition in which, for example, a palm oil-transesterified oil and fat and palm oil-fractionated oil are used together, and thus triglycerides of an SUS type, an SSU type, and a USU type (S: saturated fatty acid, U: unsaturated fatty acid) coexist is obtained. It is described that, when this oil and fat composition is used, a roll-in plastic oil and fat composition having strong stiffness, and favorable flavor and meltability in the mouth is obtained.

Patent Literature 2 discloses an oil and fat composition in which, in the entire oil and fat composition, there are 2 to 13 wt% of an SSS and 34 to 54 wt% of an SSU and an SUS in total, and a weight ratio of (total content of SSU and SUS)/SSS content is 1 or more (S: saturated fatty acid, U: unsaturated fatty acid) which is produced according to a specific method, and a method of producing a roll-in margarine containing 30 wt% or more of the oil and fat composition. An oil and fat composition used in this method is obtained when a mixed oil of extremely hardened oil or extremely hardened oil and a fractionated palm oil high-melting point fraction is mixed with a liquid oil, and a low-melting point fraction is obtained by dry fractionation of transesterified oil of the mixed oil. When the oil and fat composition is used, a roll-in margarine having favorable formability and roll-in physical properties during production is obtained.

Patent Literature 3 discloses a transesterified oil and fat obtained by random transesterification of an oil and fat formulation in which, among all fatty acid residues constituting all triglycerides in the oil and fat formulation, a proportion of lauric acid residues is 9 to 15 mass%, a proportion of palmitic acid residues is 31 to 37 mass%, a proportion of behenic acid residues is 2.5 to 5.5 mass%, and a proportion of saturated fatty acid residues is 53 to 67 mass%, and a roll-in oil and fat composition having a wide temperature tolerance (having stiffness and extensibility necessary for a roll-in oil and fat without becoming extremely hard or soft in a wide range of temperatures) is obtained by using the oil and fat.

Patent Literature 4 discloses a roll-in margarine in which, in the entire roll-in margarine, 40 to 99 wt% of oil and fat is contained, and in a triglyceride composition in the oil and fat, there are 2 to 9 wt% of an SSS, 10 to 50 wt% of a UUU, and 16 wt% or less of an SO2, a SSU/(SUS+USU) ratio is 1.0 or more and there is 29 to 43 wt% of SSS+S2U, and additionally, in constituent fatty acids in the oil and fat, P/S (weight ratio) is 0.6 or more (S: C16 to C22 saturated fatty acid, U; C16 to C22 unsaturated fatty acid, O: oleic acid, P: palmitic acid). Specifically, the roll-in margarine is obtained by blending in a fractionated liquid part of a palm oil and fat-transesterified oil, and using this, favorable formability is obtained during roll-in production, favorable extensibility is obtained during bread making, and a texture having appropriate fluffiness and softness and favorable meltability in the mouth after baking is obtained. Patent literature 5 discloses interesterified oil having less transisomer content, and bringing excellent physical properties as hard stock use for a plastic oil-and-fat composition, and to provide a plastic oil-and-fat composition using the interesterified oil.

### [Refference List]

### [Patent Literature]

[Patent Literature 1]
   Japanese Patent Application Laid-Open (JP-A) No. 2008-99603
[Patent Literature 2]
   Japanese Patent Application Laid-Open (JP-A) No. 2012-55268
[Patent Literature 3]
   Japanese Patent Application Laid-Open (JP-A) No. 2012-105583
[Patent Literature 4]
   PCT International Publication No. WO 2013/133138
Patent Literature 5
   JPA 2007 282606

### [Summary of Invention]

### [Technical Problem]

An aspect of the present invention is to provide an oil and fat which is of a low trans type with a trans fatty acid content of less than 5 wt% and which has extensibility, excellent plasticity and excellent meltability in the mouth in a wide range of temperatures, and to obtain a roll-in oil and fat composition having strong stiffness and excellent extensibility in a wide range of temperatures by using the plastic oil and fat, and also to provide a roll-in oil and fat composition with use of which it is possible to obtain a layered bakery product having an excellent crispy texture and meltability in the mouth after baking.

### [Solution to Problem]

In Patent Literature 1, for example, a palm oil-transesterified oil and fat and a palm oil fractionated oil are used together, which are relatively easily prepared. However, since palm oil is used as a base, it tends to become slightly hard at a low temperature range of 5 to 10 °C and tends to become slightly soft in a temperature range of 20 to 25 °C, and the stiffness is slightly weak, and the extensibility in a wide range of temperatures is not sufficient.

In both methods in Patent Literature 2 and Patent Literature 4, since a fractionated liquid part of palm oil and fat-transesterified oil is used as a base, dry fractionation is necessary in addition to transesterification, and its preparation is very complicated. In addition, since palm oil is still used as a base, the stiffness is slightly weak and the extensibility in a wide range of temperatures is not sufficient.

In Patent Literature 3, a palm oil and fat, a behenic acid-containing oil and fat and a liquid oil-transesterified oil are used as a base. However, since this base oil and fat also contains a palm oil and fat as a main raw material, the stiffness is still slightly weak and meltability in the mouth are also slightly heavy.

As described above, in the methods proposed in the related art, a low trans type roll-in oil and fat composition that has sufficiently satisfactory strength of stiffness and extensibility in a wide range of temperatures has not been obtained.

The inventors conducted extensive studies in order to obtain a low trans type roll-in oil composition in which a trans fatty acid content is less than 5 wt%, and which has strong stiffness and excellent extensibility in a wide range of temperatures and has plasticity, and as a result, found that a random transesterified oil in which a composition of all constituent fatty acids has a specific lauric acid content, a palmitic acid content and a stearic acid content has excellent plasticity, a roll-in oil and fat composition into which the plastic oil and fat is blended in a specific amount has excellent extensibility in a wide range of temperatures, and a layered bakery product baked using the roll-in oil and fat composition has an excellent crispy texture and meltability in the mouth, thereby completing the present invention.

That is, the present invention includes:
A transesterified oil and fat in which a lauric acid content is 5 to 25 wt%, a palmitic acid content is 5 to 25 wt% and a stearic acid content is 10 to 35 wt% with respect to all constituent fatty acids, and a weight ratio of stearic acid/palmitic acid is 0.5 to 7;
wherein a rising melting point is 30 to 40 °C, an SFC (at 20 °C) is 20 to 50%, and an SFC (at 35 °C) is 12% or less; Also described is the use of the transesterified oil and fat in a roll-in oil and fat composition containing 15 to 80 wt% of the transesterified oil and fat. The use of the roll-in oil and fat composition in a layered bakery product is part of the invention.

### [Advantageous Effects of Invention]

According to the present invention, it is possible to provide a low trans type oil and fat in which a trans fatty acid content is less than 5 wt% and having extensibility and excellent plasticity in a wide range of temperatures, and to obtain a roll-in oil and fat composition having strong stiffness and excellent extensibility in a wide range of temperatures by using the plastic oil and fat, and also to provide a roll-in oil and fat composition with use of which it is possible to obtain a layered bakery product having an excellent crispy texture and meltability in the mouth after baking.

### [Description of Embodiments]

A transesterified oil and fat of the present invention is a transesterified oil and fat in which a lauric acid content is 5 to 25 wt%, a palmitic acid content is 5 to 25 wt% and a stearic acid content is 10 to 35 wt% with respect to all constituent fatty acids, and a weight ratio (St/P ratio) of stearic acid/palmitic acid is 0.5 to 7. The lauric acid content is more preferably 10 to 20 wt% and the palmitic acid content is more preferably 5 to 20 wt%. In addition, the stearic acid content is more preferably 15 to 35 wt%. The St/P ratio is more preferably 0.8 to 5, and most preferably 1 to 3.

When the lauric acid content is less than 5 wt%, meltability in the mouth of a plastic oil and fat tend to deteriorate, and meltability in the mouth of a final layered bakery product tend to be heavy. On the other hand, when the lauric acid content exceeds 25 wt%, this is not preferable because a plastic oil and fat tends to become hard at low temperatures, the stiffness of the plastic oil and fat tends to be weak, and the extensibility in a wide range of temperatures, for example, 5 to 25 °C, tends to be lowered.

When the palmitic acid content is less than 5 wt%, meltability in the mouth of a plastic oil and fat also tend to deteriorate, and meltability in the mouth of a final layered bakery product tend to be heavy. On the other hand, when the palmitic acid content exceeds 25 wt%, a plastic oil and fat tends to become slightly hard at low temperature, the stiffness of the plastic oil and fat tends to be weak, and the extensibility in a wide range of temperatures, for example, 5 to 25 °C, tends to be lowered.

When the stearic acid content is less than 10 wt%, this is not preferable because meltability in the mouth of a plastic oil and fat tend to be favorable, a plastic oil and fat tends to become hard at low temperatures, the stiffness of the plastic oil and fat tends to be weak, and the extensibility in a wide range of temperatures, for example, 5 to 25 °C, is lowered. On the other hand, when the stearic acid content exceeds 35 wt%, meltability in the mouth of a plastic oil and fat also tend to deteriorate, and meltability in the mouth of a final layered bakery product tend to be heavy.

When the weight ratio of the stearic acid/palmitic acid is less than 0.5, this is not preferable because although meltability in the mouth of a plastic oil and fat tend to be favorable, a plastic oil and fat tends to become hard at low temperatures, the stiffness of the plastic oil and fat tends to be weak, and the extensibility in a wide range of temperatures, for example, 5 to 25 °C, is lowered. On the other hand, when the weight ratio of the stearic acid/palmitic acid exceeds 7, meltability in the mouth of a plastic oil and fat also tend to deteriorate, and meltability in the mouth of a final layered bakery product tend to be heavy.

The transesterified oil and fat of the present invention has a rising melting point that is 30 to 40 °C, and has an SFC (at 20 °C) of 20 to 50%, and an SFC (at 35 °C) of 12% or less. The rising melting point is more preferably 32 to 38 °C. In addition, more preferably, an SFC (at 20 °C) is 25 to 45% and an SFC (at 35 °C) is 9% or less.

When the rising melting point is lower than 30 °C, the extensibility in a temperature range of 20 to 25 °C tends to decrease. When the rising melting point exceeds 40 °C, meltability in the mouth of a plastic oil and fat tend to deteriorate, and meltability in the mouth of a final layered bakery product tend to be heavy. In addition, when an SFC (at 20 °C) is less than 20%, the extensibility in a temperature range of 20 to 25 °C tends to decrease and when it exceeds 50%, the extensibility in a low temperature range of 5 to 10 °C tends to decrease. When an SFC (at 35 °C) exceeds 12%, meltability in the mouth of a plastic oil and fat tend to deteriorate, and meltability in the mouth of a final layered bakery product tend to be heavy.

The transesterified oil and fat of the present invention can be obtained by, for example, blending the following oil and fat raw materials and then subjecting them to transesterification. As a lauric acid source, 10 to 50 wt% of a lauric oil and fat is contained. As a palmitic acid source, 0 to 75 wt% of a palm oil and fat is contained. As a stearic acid source, 10 to 30 wt% of an extremely hardened oil of a liquid oil and fat or a natural oil and fat rich in stearic acid is contained. In order to adjust a rising melting point and an SFC of the transesterified oil and fat, as necessary, an appropriate amount of a liquid oil and fat rich in unsaturated fatty acids or an oil and fat rich in saturated fatty acids having 20 to 24 carbon atoms may be mixed in and then subjected to transesterification.

As the lauric oil and fat, one, two or more selected from among coconut oil, palm kernel oil, babassu oil, and fractionated oils thereof, a hydrogenated oil, and a transesterified oil can be used. The hydrogenated oil is preferably extremely hardened oil.

As the palm oil and fat, one, two or more selected from among palm oil and palm olein, super palm olein, a palm medium-melting point fraction, a palm fractionated oil such as palm stearin, hydrogenated oils thereof, and a transesterified oil can be used. The hydrogenated oil is preferably an extremely hardened oil.

As the extremely hardened oil of a liquid oil and fat, one, two or more selected from among extremely hardened oils of an oil and fat rich in unsaturated fatty acids having 18 carbon atoms such as rapeseed oil, soybean oil, corn oil, sunflower oil, rice bran oil, cottonseed oil, and safflower oil can be used. As a natural oil and fat rich in stearic acid, one, two or more selected from among shea fat, sal fat, kokum fat, mango fat, allanblackia fat, and fractionated oils or hydrogenated oils thereof, and transesterified oils can be used. The hydrogenated oil is preferably an extremely hardened oil.

As the liquid oil and fat rich in unsaturated fatty acids, one, two or more selected from among rapeseed oil, soybean oil, corn oil, sunflower oil, rice bran oil, cottonseed oil, and safflower oil can be used. As the oil and fat rich in saturated fatty acids having 20 to 24 carbon atoms, an extremely hardened oil of high erucic acid rapeseed oil or fish oil can be exemplified.

The above transesterification reaction may be caused by a method using a chemical catalyst such as sodium methylate or a method using an enzyme such as lipase, and may be a nonselective randomization reaction or a selective transesterification reaction with position specificity, but it is preferably a nonselective randomization reaction.

Since the transesterified oil and fat of the present invention is of a low trans type and has extensibility, excellent plasticity and excellent meltability in the mouth in a wide range of temperatures, it can be widely used as a medium-melting point oil and fat for margarine/shortening. As one of representative uses thereof, when 15 to 80 wt% of the transesterified oil and fat of the present invention is contained in an oil phase, it is possible to obtain a roll-in oil and fat composition having excellent spreadability in a wide range of temperatures. When a content in the oil phase is less than 15 wt%, a plasticity property of the transesterified oil and fat of the present invention becomes unclear, the stiffness of the roll-in oil and fat composition becomes weak, and the extensibility in a wide range of temperatures, for example, 5 to 25 °C, tends to decrease. On the other hand, when a content in the oil phase exceeds 80 wt%, since an amount of a high-melting point oil and fat or a liquid oil and fat blended in is restricted to being less than 20 wt%, the stiffness of the roll-in oil and fat composition still becomes weak, and the extensibility in a wide range of temperatures, for example, 5 to 25 °C, tends to decrease.

In the oil phase of the roll-in oil and fat composition of the present invention, in addition to the above transesterified oil and fat, one, two or more of oils and fats selected from among various vegetable oils and fats and animal oils and fats such as lauric oils and fats, palm oils and fats, corn oil, cottonseed oil, soybean oil, rapeseed oil, rice oil, sunflower oil, safflower oil, beef tallow, milk fat, lard, cocoa butter, fish oil and whale oil; fractionated oils of these oils and fats; transesterified oils and fats of these oils and fats; and extremely hardened oil of these oils and fats can be blended in. In particular, in order to impart strong stiffness and extensibility in a wide range of temperatures, a high-melting point oil and fat with a melting point of 35 to 60 °C and a liquid oil and fat are appropriately blended in, and adjustment is preferably performed such that a rising melting point of the roll-in oil and fat composition in the oil phase becomes 30 to 42 °C, preferably 32 to 40 °C, and an SFC (at 20 °C) becomes 20 to 45%, and preferably becomes 25 to 40%, and an SFC (at 35 °C) becomes 12% or less, and preferably becomes 9% or less.

The roll-in oil and fat composition of the present invention may be a margarine type including an aqueous phase or a shortening type including no aqueous phase, but a margarine type having an aqueous phase is preferable. As the margarine type, any of a water-in-oil type, an oil-in-water type, and a double emulsion type may be used, and a water-in-oil type is preferable.

An emulsifier may be added to the roll-in oil and fat composition of the present invention as necessary. Examples of the emulsifier include lecithin, a glycerin fatty acid ester, a polyglycerol condensed ricinoleic acid ester, a sugar ester, a polyglycerin fatty acid ester, a sorbitan fatty acid ester, a polyoxyethylene sorbitan fatty acid ester, a propylene glycol fatty acid ester, various organic acid monoglycerides such as acetic acid monoglyceride, tartaric acid monoglyceride, acetic acid tartaric acid mixed monoglyceride, citric acid monoglyceride, diacetyl tartaric acid monoglyceride, lactic acid monoglyceride, succinic acid monoglyceride, and malic acid monoglyceride, calcium stearoyl lactate, and sodium stearoyl lactate.

In addition to the above oil and fat and additives, in the roll-in oil and fat composition of the present invention, if desired, an oil-soluble component such as a dye, an antioxidant, and a flavoring agent, and a water-soluble component such as an organic acid, table salt, sugar, and powdered milk, and fermented milk can be used.

A method of producing a roll-in oil and fat composition of the present invention is not particularly limited. The roll-in oil and fat composition can be produced by preliminary-emulsifying an oil phase and an aqueous phase by a general method, and then quenching and kneading by a perfector, a votator, a combination device or the like. The oil phase can be prepared by adding an oil-soluble component such as a dye, an antioxidant, and a flavoring agent to a melted oil and fat as necessary and dissolving/dispersing it. The aqueous phase can be prepared by adding a water-soluble milk component, and as necessary, table salt, sugar, an inorganic salt, or the like, to water or hot water and dissolving/dispersing them.

A layered bakery food product of the present invention can be obtained by thinly spreading wheat flour dough that is obtained by adding water and salt to wheat flour as a main raw material and performing kneading, placing a roll-in oil and fat composition thereon and folding it, and thinly spreading it again, which are repeated to form layered dough, and performing fermentation, molding, and baking as necessary. Specific examples of a layered swollen wheat flour product obtained in this manner include Danish pastries, croissants, and pies. In addition, since quality degradation over time is effectively minimized, the present invention is particularly suitable for products that are displayed and sold within several days.

### Examples

The present invention will be described below in more detail with reference to examples. Here, in the example, "%" and "parts" refer to a value based on weight unless otherwise specified. Here, a fatty acid composition, a rising melting point and an SFC of an oil and fat were measured by the following methods.
Fatty acid composition: measured according to a method described in Japanese Oil Chemistry Association Standard Oil Analysis Test Method (1996 edition) 2.4.1.2 Methyl esterification method (boron trifluoride methanol method)
Rising melting point: measured according to a method described in Japanese Oil Chemistry Association Standard Oil Analysis Test Method (1996 edition) 2.2.4.2 (rising melting point)
SFC: measured according to IUPAC.2 150 SOLID CONTENT DETERMINATION IN FATS BY NMR

### (Preparation of transesterified oil and fat)

### Example 1

44 parts of a palm oil-fractionated low-melting point fraction (with an iodine value of 67), 40 parts of a palm kernel oil-fractionated low-melting point fraction (with an iodine value of 26) and 16 parts of rapeseed extremely hardened oil (with an iodine value of 1.2) were mixed together, and a random transesterification reaction was caused using sodium methylate as a catalyst. Then, decolorization and deodorization were performed by a general method and a transesterified oil and fat 1 was obtained as a refined oil. The composition of the obtained oil and fat 1 is shown in Table 1.

### Example 2

25 parts of a palm oil-fractionated low-melting point fraction (with an iodine value of 67), 40 parts of a palm kernel oil-fractionated low-melting point fraction (with an iodine value of 26), 23 parts of rapeseed extremely hardened oil (with an iodine value of 1.2) and 12 parts of rapeseed oil were mixed together, and a random transesterification reaction was caused using sodium methylate as a catalyst. Then, decolorization and deodorization were performed by a general method, and a transesterified oil and fat 2 was obtained as a refined oil. The composition of the obtained oil and fat 2 is shown in Table 1.

### Example 3

34 parts of a palm oil-fractionated low-melting point fraction (with an iodine value of 67), 30 parts of a palm kernel oil-fractionated low-melting point fraction (with an iodine value of 26), 27 parts of rapeseed extremely hardened oil (with an iodine value of 1.2) and 9 parts of rapeseed oil were mixed together, and a random transesterification reaction was caused using sodium methylate as a catalyst. Then, decolorization and deodorization were performed by a general method, and a transesterified oil and fat 3 was obtained as a refined oil. The composition of the obtained oil and fat 3 is shown in Table 1.

### Example 4

40 parts of a palm kernel oil-fractionated low-melting point fraction (with an iodine value of 26), 30 parts of rapeseed extremely hardened oil (with an iodine value of 1.2) and 30 parts of rapeseed oil were mixed together, and a random transesterification reaction was caused using sodium methylate as a catalyst. Then, decolorization and deodorization were performed by a general method, and a transesterified oil and fat 4 was obtained as a refined oil. The composition of the obtained oil and fat 4 is shown in Table 1.

### Comparative Example 1

50 parts of palm oil (with an iodine value of 52), 40 parts of a palm kernel oil-fractionated low-melting point fraction (with an iodine value of 26) and 10 parts of a fractionated palm oil high-melting point fraction (with an iodine value of 42) were mixed together and a random transesterification reaction was caused using sodium methylate as a catalyst. Then, decolorization and deodorization were performed by a general method, and a transesterified oil and fat 5 was obtained as a refined oil. The composition of the obtained oil and fat 5 is shown in Table 1.

### Comparative Example 2

55 parts of palm oil (with an iodine value of 52), 40 parts of a palm kernel oil-fractionated low-melting point fraction (with an iodine value of 26) and 5 parts of rapeseed extremely hardened oil (with an iodine value of 1.2) were mixed together and a random transesterification reaction was caused using sodium methylate as a catalyst. Then, decolorization and deodorization were performed by a general method, and a transesterified oil and fat 6 was obtained as a refined oil. The composition of the obtained oil and fat 6 is shown in Table 1.

**Table 1**

| | Example 1 | Example 2 | Example 3 | Example 4 | Comparative Example 1 | Comparative Example 2 |
|---|---|---|---|---|---|---|
| Transesterified oil and fat | Oil and fat 1 | Oil and fat 2 | Oil and fat 3 | Oil and fat 4 | Oil and fat 5 | Oil and fat 6 |
| Lauric acid content % | 15.3 | 15.6 | 11.4 | 15.7 | 15.5 | 15.4 |
| Palmitic acid content % | 18.6 | 13.3 | 15.1 | 5.9 | 33.2 | 28.9 |
| Stearic acid content % | 18.0 | 24.3 | 27.9 | 30.4 | 4.0 | 8.2 |
| St/P ratio | 1.0 | 1.8 | 1.8 | 5.2 | 0.1 | 0.3 |
| Rising melting point °C | 33.2 | 35.4 | 34.9 | 32.0 | 33.7 | 33.3 |
| SFC 20 °C | 27.9 | 31.7 | 40.0 | 32.1 | 29.7 | 27.2 |
| SFC 35 °C | 2.6 | 4.0 | 8.6 | 4.9 | 2.4 | 1.9 |

| | | | | | | |
|---|---|---|---|---|---|---|
| St/P ratio: weight ratio of stearic acid/palmitic acid | | | | | | |

In order to prepare a roll-in oil and fat composition, the following medium-melting point transesterified oil and fat and high-melting point transesterified oil and fat were separately prepared.

### (Medium-melting point transesterified oil and fat)

A random transesterification reaction was caused in a mixed oil and fat including 50 parts of palm oil (with an iodine value of 52) and 50 parts of palm kernel oil (with an iodine value of 18) using sodium methylate as a catalyst. Then, decolorization and deodorization were performed by a general method, and a transesterified oil and fat 7 was obtained as a refined oil. A melting point of the oil and fat 7 was 32 °C.

### (High-melting point transesterified oil and fat)

A random transesterification reaction was caused in a mixed oil and fat including 60 parts of a palm oil high-melting point fraction (with an iodine value of 40), 37 parts of palm oil (with an iodine value of 52), and 3 parts of high erucic acid rapeseed extremely hardened oil (with an iodine value of 1.0) using sodium methylate as a catalyst. Then, decolorization and deodorization were performed by a general method and a transesterified oil and fat 8 was obtained as a refined oil. A melting point of the oil and fat 8 was 46 °C.

### (Preparation of roll-in oil and fat composition)

### Example 5

Molten oils of 22.1 parts of the oil and fat 1 prepared in Example 1, 10.1 parts of the oil and fat 7, 20 parts of the oil and fat 8, 21 parts of butter oil and 11 parts of rapeseed oil were mixed together and 0.1 parts of lecithin was added to prepare an oil phase. 1.2 parts of table salt was added to 14.5 parts of water to prepare an aqueous phase. The oil phase and the aqueous phase were mixed and stirred at 60 °C and subjected to preliminary emulsification, and quenched and kneaded by a combination device, and thereby a roll-in oil and fat composition 1 having a favorable structure was obtained. Here, the rising melting point of the oil phase was 33.6 °C.

### Example 6

A roll-in oil and fat composition 2 was prepared in the same manner as in Example 5 except that 22.1 parts of the oil and fat 2 prepared in Example 2 was used in place of 22.1 parts of the oil and fat 1 and thereby a roll-in oil and fat composition 2 was obtained. Here, the rising melting point of the oil phase was 36.1 °C.

### Example 7

Molten oils of 32.1 parts of the oil and fat 3 prepared in Example 3, 10.1 parts of the oil and fat 7, 10 parts of the oil and fat 8, 21 parts of butter oil and 11 parts of rapeseed oil were mixed together and 0.1 parts of lecithin was added to prepare an oil phase. 1.2 parts of table salt was added to 14.5 parts of water to prepare an aqueous phase. The oil phase and the aqueous phase were mixed and stirred at 60 °C and subjected to preliminary emulsification, and quenched and kneaded by a combination device and thereby a roll-in oil and fat composition 3 having a favorable structure was obtained. Here, the rising melting point of the oil phase was 36.3 °C.

### Example 8

Molten oils of 22.1 parts of the oil and fat 4 prepared in Example 4, 10.1 parts of the oil and fat 7, 20 parts of the oil and fat 8, 21 parts of butter oil and 11 parts of rapeseed oil were mixed together and 0.1 parts of lecithin was added to prepare an oil phase. 1.2 parts of table salt was added to 14.5 parts of water to prepare an aqueous phase. The oil phase and the aqueous phase were mixed and stirred at 60 °C and subjected to preliminary emulsification, and quenched and kneaded by a combination device, and thereby a roll-in oil and fat composition 4 having a favorable structure was obtained. Here, the rising melting point of the oil phase was 35.9 °C.

### Comparative Example 3

A roll-in oil and fat composition was prepared in the same manner as in Example 5 except that 22.1 parts of the oil and fat 5 prepared in Comparative Example 1 was used in place of 22.1 parts of the oil and fat 1, and thereby a roll-in oil and fat composition 5 was obtained. Here, the rising melting point of the oil phase was 37.4 °C.

### Comparative Example 4

A roll-in oil and fat composition was prepared in the same manner as in Example 5 except that 22.1 parts of the oil and fat 6 prepared in Comparative Example 2 was used in place of 22.1 parts of the oil and fat 1 and thereby a roll-in oil and fat composition 6 was obtained. Here, the rising melting point of the oil phase was 34.3 °C.

Table 2 shows analysis results of the roll-in oil and fat compositions prepared in Examples 5 to 8, and Comparative Examples 3 to 4.

**Table 2**

| | Example 5 | Example 6 | Example 7 | Example 8 | Comparative Example 3 | Comparative Example 4 |
|---|---|---|---|---|---|---|
| Roll-in oil and fat | Composition 1 | Composition 2 | Composition 3 | Composition 4 | Composition 5 | Composition 6 |
| Oil and fat 1 (Example 1) | 22.1 | | | | | |
| Oil and fat 2 (Example 2) | | 22.1 | | | | |
| Oil and fat 3 (Example 3) | | | 32.1 | | | |
| Oil and fat 4 (Example 4) | | | | 22.1 | | |
| Oil and fat 5 (Comparative Example 1) | | | | | 22.1 | |
| Oil and fat 6 (Comparative Example 2) | | | | | | 22.1 |
| Medium-melting point transesterified oil and fat 7 | 10.1 | 10.1 | 10.1 | 10.1 | 10.1 | 10.1 |
| High-melting point transesterified oil and fat 8 | 20.0 | 20.0 | 10.0 | 20.0 | 20.0 | 20.0 |
| Rapeseed oil | 11.0 | 11.0 | 11.0 | 11.0 | 11.0 | 11.0 |
| Butter oil | 21.0 | 21.0 | 21.0 | 21.0 | 21.0 | 21.0 |
| Oil phase rising melting point °C | 33.6 | 36.1 | 36.3 | 35.9 | 37.4 | 34.3 |
| SFC 20 °C | 28.3 | 29.6 | 29.3 | 29.0 | 29.3 | 28.3 |
| SFC 35 °C | 6.3 | 6.4 | 6.2 | 6.3 | 6.4 | 6.3 |

### (Preparation of layered bakery food product)

Using the roll-in oil and fat compositions 1 to 6 prepared in Examples 5 to 8 and Comparative Examples 3 to 4, croissants were prepared according to the following formulation.

**Croissant dough formulation**

| | |
|---|---|
| Strong flour | 100 parts by weight |
| White sugar | 8 parts by weight |
| Table salt | 1.6 parts by weight |
| Powdered skimmed milk | 3 parts by weight |
| Whole egg | 10 parts by weight |
| Malt syrup | 0.5 parts by weight |
| Kneaded oil and fat | 6 parts by weight |
| Yeast | 3 parts by weight |
| Yeast food | 0.1 parts by weight |
| Water | 50 parts by weight |

50 parts by weight of the roll-in oil and fat composition was used versus the strong flour.

### Examples 9 to 12 and Comparative Examples 5 to 6

The croissant dough raw material was kneaded and fermented in a container at 28 °C and a humidity of 75% for 60 minutes and then retarded in a freezer at -18 °C for 60 minutes. The roll-in oil and fat compositions of Examples 5 to 8 and Comparative Examples 3 to 4 were folded in (50% versus the flour), folding three times in a reverse-seater was performed twice, the compositions were retarded in a freezer at -7 °C for 60 minutes, folding three times was performed once in the reverse-seater, and then retarding in a freezer was performed at -7 °C for 45 minutes. Next, the compositions were finally spread and molded until the dough thickness reached 4 mm in the reverse-seater. After molding, the compositions were fermented in a container at 32 °C and a humidity of 75% for 60 minutes, and then baked in an oven at a temperature of 210 °C in the container for 16 minutes, and thereby croissants 1 to 6 were obtained.

### (Evaluation of stiffness and extensibility of roll-in oil and fat composition)

The roll-in oil and fat compositions of which a temperature was controlled in a thermostatic chamber at 10 °C and 20 °C were wrapped in doughs and folded (50% versus the flour), folding three times in a reverse-seater was performed twice, and the extensibility of the roll-in oil and fat compositions was evaluated according to the following criteria. In addition, the stiffness of the roll-in oil and fat composition was evaluated from dough states during final spreading according to the following criteria. The evaluation results are shown in Table 3. O or higher was determined to be satisfactory in all evaluations.

### (Evaluation of roll-in (extensibility) when a temperature was controlled to be 10 °C)

⊚: The oil and fat finely extended to the edge without breaking in the roll-in oil and fat composition
O: Dough remained on the edge although the roll-in oil and fat composition did not break
Δ: Slight breaking was observed in the roll-in oil and fat composition but the dough remained on the edge
X: The roll-in oil and fat composition broke and was difficult to extend

### (Evaluation of roll-in (extensibility) when a temperature was controlled to be 20 °C)

⊚: The roll-in oil and fat extended without breaking and did not soften, and the dough did not shrink.
O: The roll-in oil and fat extended without breaking, but it was slightly softened, and the dough shrank.
Δ: The roll-in oil and fat extended without breaking, but it was softened, and the dough shrank.
X: The roll-in oil and fat was softened and kneaded into the dough.

### (Molded Dough state after final spreading (evaluation of stiffness))

⊚: The stiffness of the dough was strong, the dough did not shrink at all, and moldability was favorable.
O: The dough had stiffness and did not shrink at all, and moldability was favorable
Δ: The dough was slightly soft and shrank slightly, and thus moldability was inferior.
X: The dough was soft and shrank, and thus moldability was poor.

### (Evaluation of layered bakery food products)

The croissants 1 to 6 prepared above were subjected to sensory evaluation by 7 panelists, and meltability in the mouth and textures (crispy texture and crunchy texture) one day after baking were evaluated. The results are shown in Table 3. B or higher was determined to be satisfactory in all evaluations.

### (Meltability in the mouth)

⊚: Very favorable
O: Favorable
Δ: Slightly poor
X: Poor

### (Textures)

⊚: Both a crispy texture and a crunchy texture were very favorable
○: Both a crispy texture and a crunchy texture were favorable
Δ: Slightly poor crispy texture and crunchy texture
X: Poor crispy texture and crunchy texture

**Table 3**

| | Example 9 | Example 10 | Example 11 | Example 12 | Comparative Example 5 | Comparative Example 6 |
|---|---|---|---|---|---|---|
| Roll-in composition | Composition 1 | Composition 2 | Composition 3 | Composition 4 | Composition 5 | Composition 6 |
| Extensibility at a controlled temperature of 10°C | ○ | ⊚ | ⊚ | ○ | Δ | Δ |
| Extensibility at a controlled temperature of 20°C | ⊚ | ⊚ | ⊚ | ⊚ | X | Δ |
| Final spreading, moldability | ○ | ⊚ | ⊚ | ⊚ | X | Δ |
| Croissant | 1 | 2 | 3 | 4 | 5 | 6 |
| Meltability in the mouth | ⊚ | ⊚ | ○ | ○ | ⊚ | ⊚ |
| Texture | ○ | ⊚ | ⊚ | ⊚ | Δ | ○ |

As shown in Table 3, the roll-in oil and fat compositions 1 to 4 in which the transesterified oils and fats 1 to 4 of the present invention were used had favorable extensibility at 10 to 20 °C and had excellent stiffness. In addition, the croissants 1 to 4 baked using the roll-in oil and fat compositions 1 to 4 had favorable meltability in the mouth and a favorable crispy texture and crunchy texture.

### Example 13

Molten oils of 59.5 parts of the oil and fat 3 prepared in Example 3, 10 parts of the oil and fat 8, and 13.5 parts of rapeseed oil were mixed together and stearic acid monoglyceride (product name: Emulsion MS commercially available from Riken Vitamin Co., Ltd.) and 0.1 parts of lecithin were added to prepare an oil phase. 1 part of table salt was added to 15.8 parts of water to prepare an aqueous phase. The oil phase and the aqueous phase were mixed and stirred at 60 °C and subjected to preliminary emulsification, and quenched and kneaded by a combination device, and thereby a roll-in oil and fat composition 7 having a favorable structure was obtained. Here, the rising melting point of the oil phase was 37.4 °C.

### Comparative Example 7

As a high-melting point transesterified oil and fat 9, a transesterified refined oil (with an iodine value of 0.8 and a rising melting point of 53 °C) of a mixed oil containing 52 parts of rapeseed extremely hardened oil, 38 parts of palm kernel extremely hardened oil and 10 parts of high erucic acid rapeseed extremely hardened oil was prepared.

Molten oils of 47 parts of the oil and fat 5 prepared in Comparative Example 1, 17 parts of the oil and fat 8, 5.5 parts of the oil and fat 9 and 13.5 parts of rapeseed oil were mixed together, and stearic acid monoglyceride (product name: Emulsion MS commercially available from Riken Vitamin Co., Ltd.) and 0.1 parts of lecithin were added to prepare an oil phase. 1 part of table salt was added to 15.8 parts of water to prepare an aqueous phase. The oil phase and the aqueous phase were mixed and stirred at 60 °C and subjected to preliminary emulsification, and quenched and kneaded by a combination device, and thereby a roll-in oil and fat composition 8 having a favorable structure was obtained. Here, the rising melting point of the oil phase was 37.5 °C.

Table 4 shows analysis results of the roll-in oil and fat compositions prepared in Example 13 and Comparative Example 7.

**Table 4**

| | Example 13 | Comparative Example 7 |
|---|---|---|
| Roll-in oil and fat | Composition 7 | Composition 8 |
| Oil and fat 3 (Example 3) | 59.5 | |
| Oil and fat 5 (Comparative Example 1) | | 47.0 |
| Oil and fat 8 | 10.0 | 17.0 |
| Oil and fat 9 | | 5.5 |
| Rapeseed oil | 13.5 | 13.5 |
| Oil phase rising melting point °C | 37.4 | 38.5 |
| SFC 20 °C SFC 35 °C | 33.3 8.0 | 34.1 8.7 |

### Example 14 and Comparative Example 8

In the same manner as in Examples 9 to 12, croissants were prepared using the roll-in oil and fat compositions 7 and 8 prepared in Example 13 and Comparative Example 7, and croissants 7 and 8 were obtained. The stiffness and extensibility of the roll-in oil and fat compositions 7 and 8 were evaluated under conditions of 10 °C and 20 °C in the same manner as in Examples 9 to 12. In addition, the croissants 7 and 8 were evaluated in the same manner as in Examples 9 to 12. The results are shown in Table 5.

**Table 5**

| | Example 14 | Comparative Example 8 |
|---|---|---|
| Roll-in oil and fat | Composition 7 | Composition 8 |
| Extensibility at a controlled temperature of 10°C | ⊚ | Δ |
| Extensibility at a controlled temperature of 20°C | ⊚ | ○ |
| Final spreading, moldability | ⊚ | ⊚ |
| Croissant | 7 | 8 |
| Meltability in the mouth | ⊚ | X |
| Texture | ⊚ | ○ |

### [Industrial Applicability]

According to the present invention, it is possible to provide a low trans type oil and fat having extensibility and excellent plasticity in a wide range of temperatures, a roll-in oil and fat composition having strong stiffness and excellent extensibility in a wide range of temperatures using the plastic oil and fat, and a layered bakery food product using the roll-in oil and fat composition and having an excellent crispy texture and meltability in the mouth after baking.

## Claims

1. A transesterified oil and fat **characterized by** a lauric acid content of 5 to 25 wt%, a palmitic acid content of 5 to 25 wt% and a stearic acid content of 10 to 35 wt% with respect to all constituent fatty acids, and a weight ratio of stearic acid/palmitic acid of 0.5 to 3,
wherein a rising melting point is 30 to 40 °C, a solid fat content (SFC) at 20 °C is 20 to 50%, and an SFC at 35 °C is 12% or less.

2. Use of the transesterified oil and fat according to claim 1 in a roll-in oil and fat composition comprising 15 to 80 wt% of the transesterified oil and fat in an oil phase.

3. Use of the transesterified oil and fat according to claim 1 in a roll-in composition comprising 15 to 80% of said oil and fat in an oil phase, for making a layered bakery food product.

## Patentansprüche

1. Umgeestertes Öl und Fett, **gekennzeichnet durch** einen Laurinsäuregehalt von 5 bis 25 Gew.-%, einen Palmitinsäuregehalt von 5 bis 25 Gew.-% und einen Stearinsäuregehalt von 10 bis 35 Gew.-%, bezogen auf alle Bestandteile an Fettsäuren, und ein Gewichtsverhältnis von Stearinsäure/Palmitinsäure von 0,5 bis 3,
wobei ein steigender Schmelzpunkt 30 bis 40 °C beträgt, ein Festfettgehalt (SFC) bei 20 °C 20 bis 50 % beträgt und ein SFC bei 35 °C 12 % oder weniger beträgt.

2. Verwendung des umgeesterten Öl- und Fetts gemäß Anspruch 1 in einer Öl- und Fettzusammensetzung zum Einwalzen (Roll-in), umfassend 15 bis 80 Gew.-% des umgeesterten Öls und Fetts in einer Ölphase.

3. Verwendung des umgeesterten Öl- und Fetts gemäß Anspruch 1 in einer Zusammensetzung zum Einwalzen (Roll-in), umfassend 15 bis 80% des umgeesterten Öls und Fetts in einer Ölphase, um ein geschichtetes Backwaren-Lebensmittelprodukt herzustellen.

## Revendications

1. Huile et graisse transestérifiées, **caractérisées par** une teneur en acide laurique de 5 à 25 % en poids, une teneur en acide palmitique de 5 à 25 % en poids et une teneur en acide stéarique de 10 à 35 % en poids par rapport à tous les acides gras constituants, et un rapport pondéral d'acide stéarique/palmitique de 0,5 à 3,
dans lesquelles un point de fusion croissant est compris entre 30 et 40 °C, une teneur en graisse solide (SFC) à 20 °C est comprise entre 20 et 50 %, et une SFC à 35 °C est de 12 % ou moins.

2. Utilisation de l'huile et de la graisse transestérifiées selon la revendication 1 dans une composition d'huile et de graisse à rouler comprenant de 15 à 80 % en poids de l'huile et de la graisse transestérifiées dans une phase huileuse.

3. Utilisation de l'huile et de la graisse transestérifiées selon la revendication 1 dans une composition d'huile et de graisse à rouler comprenant de 15 à 80 % en poids de ladite huile et de ladite graisse transestérifiées dans une phase huileuse, pour la fabrication d'un produit alimentaire de boulangerie feuilleté.
